(19) Europäisches Patentamt
European Patent Office
Office européen des brevets

(11) EP 4 685 179 A1

(12) EUROPEAN PATENT APPLICATION
published in accordance with Art. 153(4) EPC

(43) Date of publication:
**28.01.2026 Bulletin 2026/05**

(21) Application number: **24775163.9**

(22) Date of filing: **19.03.2024**

(51) International Patent Classification (IPC):
***C08K 5/1539** (2006.01)* ***C08K 5/00** (2006.01)*
***C08K 5/49** (2006.01)* ***C08K 3/014** (2018.01)*
***C08K 3/32** (2006.01)* ***C08L 69/00** (2006.01)*

(52) Cooperative Patent Classification (CPC):
**C08K 3/014; C08K 3/32; C08K 5/00; C08K 5/1539; C08K 5/49; C08L 69/00**

(86) International application number:
**PCT/KR2024/003407**

(87) International publication number:
**WO 2024/196115 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 KR 20230036148**

(71) Applicant: **Samyang Corporation**
**Jongno-gu**
**Seoul 03129 (KR)**

(72) Inventors:
- **KANG, Min Goo**
  **Daejeon 34022 (KR)**
- **KIM, Nung Hyun**
  **Jinju-si Gyeongsangnam-do 52790 (KR)**
- **AN, Tae Jin**
  **Seoul 06664 (KR)**
- **OH, Seok Bin**
  **Incheon 22188 (KR)**
- **HAN, Jung Kyu**
  **Sejong 30092 (KR)**

(74) Representative: **Gleiss Große Schrell und Partner mbB**
**Leitzstraße 45**
**70469 Stuttgart (DE)**

# (54) POLYCARBONATE RESIN COMPOSITION HAVING EXCELLENT IONIZING RADIATION RESISTANCE, AND MOLDED ARTICLE INCLUDING SAME

(57) The present invention pertains to a polycarbonate resin composition having excellent ionizing radiation resistance, and a molded article including same. More specifically, the present invention pertains to: a polycarbonate resin composition containing a polycarbonate resin, a polyalkylene glycol adduct of anhydrous sugar alcohol, and a specific colorant ingredient, and thus having significantly improved ionizing radiation resistance compared to the prior art and having an excellent balance of mechanical properties, and therefore being particularly suitable for use in medical supplies that are irradiated with gamma rays in order to be sterilized; and a molded article including the polycarbonate resin composition.



Processed by Luminess, 75001 PARIS (FR)

## Description

### TECHNICAL FIELD

The present invention relates to a polycarbonate resin composition with excellent resistance to ionizing radiation and a molded article comprising the same, and more specifically, the present invention relates to a polycarbonate resin composition which comprises polycarbonate resin, polyalkylene glycol adduct of anhydrosugar alcohol, and a specific colorant component, and has significantly improved resistance to ionizing radiation as compared with conventional technologies and excellent balance of mechanical properties, and so is particularly suitable for use in medical devices that are irradiated with gamma ray for sterilization purposes, and a molded article comprising the same.

### BACKGROUND ART

Polycarbonate resin is a general-purpose thermoplastic engineering plastic with a glass transition temperature of around 150°C, and has excellent mechanical properties such as tensile strength and impact strength, etc., dimensional stability, heat resistance and optical transparency, and because of such excellent properties, it is also widely used as a material for medical devices.

Medical devices require sterilization before and after use due to the nature of their use, and among the sterilization methods, gamma ray sterilization is mainly used. However, when gamma ray-which is ionizing radiation-is irradiated on polycarbonate material, there is a problem that the yellowness index (YI) increases and thus the appearance deteriorates. Accordingly, various attempts have been made to impart resistance to ionizing radiation to polycarbonate resin compositions.

For example, Japanese Laid-open Patent Publication No. 2012-207230 discloses a composition which comprises a polycarbonate resin and an anthraquinone-based colorant, and thus has resistance to ionizing radiation. In this prior art, the color of a specimen after ionizing radiation (gamma ray) irradiation is controlled by the colorant alone, but there is a problem in that after 7 days from the ionizing radiation (gamma ray) irradiation, a 3 mm specimen becomes to have dark color with the Col-L (Color L (Lightness)) value of less than 85.

Meanwhile, a technology of introducing a glycol type additive into a polycarbonate resin composition and thereby reducing the YI increased after gamma-ray irradiation has been suggested, and commercially available products as such include, for example, INFINO® PC MR-1005, INFINO® PC MR-1015, etc. of Lotte Chemical Co., Ltd., and Makrolon Rx1805, Makrolon Rx2430, etc. of COVESTRO Co., Ltd. All of the above products are made of PC (polycarbonate resin) + PAG (polyalkylene glycol) + colorant as main components, and their main application is use as transparent parts for ionizing radiation (gamma ray) sterilization. However, such prior art, for example, the composition comprising polycarbonate, polyalkylene glycol, and organic/inorganic synthetic pigment disclosed in Korean Laid-open Patent Publication No. 10-2016-0122630, also has a problem in that after 7 days from the ionizing radiation (gamma ray) irradiation, a 3 mm specimen becomes to have dark color with the L* (lightness) value of 85 or less, and the color resilience is poor.

### CONTENTS OF THE INVENTION

### PROBLEMS TO BE SOLVED

The purpose of the present invention is to provide a polycarbonate resin composition having significantly improved resistance to ionizing radiation as compared with conventional technologies and excellent balance of mechanical properties, and a molded article comprising the same.

### TECHNICAL MEANS

In order to achieve the above-stated purpose, the present invention provides a polycarbonate resin composition resistant to ionizing radiation, comprising: (A) polycarbonate (PC) resin; (B) polyalkylene glycol adduct of anhydrosugar alcohol; and (C) a colorant component which is blue pigment, red pigment, or combination thereof, wherein, when a 3 mm thick specimen of the resin composition is irradiated with 25 kGy gamma ray and measured after 7 days from the irradiation according to ASTM D1925, the yellowness index change (ΔYI) value is 14.7 or less.

According to the other aspect, the present invention provides a molded article comprising the polycarbonate resin composition of the present invention.

In an embodiment, the molded article may be a medical device resistant to ionizing radiation.

## EFFECT OF THE INVENTION

The polycarbonate resin composition and the molded article comprising the same according to the present invention exhibit significantly less change in color and lightness even after ionizing radiation (gamma ray) irradiation (i.e., exhibiting a low ΔYI (yellowness index change) value and a high Color L (lightness) value) and excellent color resilience over time after irradiation (i.e., significant decrease of ΔYI over time after irradiation), and also can maintain excellent mechanical properties in a well-balanced state, and thus can be used very suitably for medical devices that are irradiated with gamma ray for sterilization purposes.

## CONCRETE MODE FOR CARRYING OUT THE INVENTION

The present invention is explained in more detail below.

The "yellowness index change (ΔYI) value" as used herein is the difference between the yellowness index (YI) value of a specimen of resin composition before irradiating the specimen with gamma ray and the yellowness index (YI) value of the yellowed specimen after the irradiation. A composition resistant to ionizing radiation shows a decrease in ΔYI value over time after gamma irradiation due to the resisting action of the composition to color change, which demonstrates the color resilience of the composition. Therefore, the ΔYI value data over time after gamma ray irradiation is an indicator of the color resilience of the composition, and the composition of the present invention is characterized in exhibiting the significant decrease of ΔYI over time after gamma ray irradiation, which means that the color resilience is significantly excellent.

The polycarbonate resin composition resistant to ionizing radiation of the present invention comprises (A) polycarbonate (PC) resin; (B) polyalkylene glycol adduct of anhydrosugar alcohol; and (C) a colorant component which is blue pigment, red pigment, or combination thereof, wherein, when a 3 mm thick specimen of the resin composition is irradiated with 25 kGy gamma ray and measured after 7 days from the irradiation according to ASTM D1925, the yellowness index change (ΔYI) value (also referred to as "ΔYI value after 7 days from gamma ray irradiation" hereinafter) is 14.7 or less.

More specifically, the ΔYI value after 7 days from gamma ray irradiation of the resin composition of the present invention may be 14.6 or less, 14.5 or less, 14.4 or less, 14.3 or less, 14.2 or less, 14.1 or less, or 14 or less. There is no special limitation to the lower limit of the ΔYI value after 7 days from gamma ray irradiation, and for example, it may be 9 or more, 9.5 or more, 10 or more, or 10.5 or more, but it is not limited thereto.

In an embodiment, when a 3 mm thick specimen of the resin composition of the present invention is irradiated with 25 kGy gamma ray and measured after 1 day from the irradiation according to ASTM D1925, the yellowness index change (ΔYI) value (also referred to as "ΔYI value after 1 day from gamma ray irradiation" hereinafter) may be 25.5 or less, and more specifically, it may be 25.4 or less, 25 or less, 24.5 or less, or 24 or less. There is no special limitation to the lower limit of the ΔYI value after 1 day from gamma ray irradiation, and for example, it may be 17 or more, 17.5 or more, 18 or more, 18.5 or more, 19 or more, or 19.5 or more, but it is not limited thereto.

In an embodiment, when a 3 mm thick specimen of the resin composition of the present invention is irradiated with 25 kGy gamma ray and measured after 7 days from the irradiation according to ASTM D2244, the lightness (L) value (also referred to as "L value after 7 days from gamma ray irradiation" hereinafter) may be 85.5 or more, and more specifically, it may be 85.6 or more, 86 or more, 86.5 or more, 87 or more, 87.5 or more, 88 or more, 88.5 or more, 89 or more, or 89.5 or more. There is no special limitation to the upper limit of the L value after 7 days from gamma ray irradiation, and for example, it may be 95 or less, 94.5 or less, 94 or less, 93.5 or less, 93 or less, 92.5 or less, 92 or less, or 91.5 or less, but it is not limited thereto.

In an embodiment, when an impact strength specimen (1/8 inch thick, notched-Izod) of the resin composition of the present invention is irradiated with 25 kGy gamma ray and measured after 1 day from the irradiation according to ASTM D256, the impact strength retention ratio (%) value (also referred to as "impact strength retention ratio value after 1 day from gamma ray irradiation" hereinafter) may be 94.9% or more, and more specifically, it may be 95% or more, 95.5% or more, or 96% or more. The upper limit of the L value after 1 day from gamma ray irradiation is theoretically 100%, but in reality, it may be greater than that (e.g., 105%) due to measurement error, etc.

The "impact strength retention ratio value" as used herein refers to-in case of irradiating a specimen of the resin composition with gamma ray-the impact strength value of the specimen after the irradiation expressed as a relative percentage (%) when the impact strength value of the specimen before the irradiation is set to 100%.

### (A) Polycarbonate (PC) resin

The polycarbonate resin, which can be comprised in the resin composition of the present invention, is preferably an aromatic polycarbonate resin, but there is no special limitation to its kind as long as the technical idea of the present invention can be realized thereby, and any thermoplastic aromatic polycarbonate resin conventionally used in this field can

be used.

In an embodiment, the aromatic polycarbonate resin may be prepared from a dihydric phenol, a carbonate precursor and a molecular weight-controlling agent. The dihydric phenol is one of the monomers constituting the aromatic polycarbonate resin, and it may be a compound represented by the following chemical formula 1.

[Chemical formula 1]

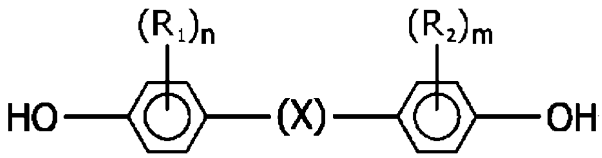

In the above chemical formula 1,

X represents a linear, branched or cyclic alkylene group having no functional group; or a linear, branched or cyclic alkylene group having one or more functional groups selected from the group consisting of sulfide group, ether group, sulfoxide group, sulfone group, ketone group, naphthyl group and isobutylphenyl group, and more specifically, X may be a linear alkylene group having 1 to 10 carbon atoms or a branched alkylene group having 3 to 10 carbon atoms, or a cyclic alkylene group having 3 to 10 carbon atoms; each of $R_1$ and $R_2$ independently represents halogen atom, or an alkyl group, for example, a linear alkyl group having 1 to 20 carbon atoms, a branched alkyl group having 3 to 20 carbon atoms, or a cyclic alkyl group having 3 to 20 (preferably, 3 to 6) carbon atoms; and
each of n and m independently represents an integer of 0 to 4.

The non-limited example of the above dihydric phenol may be bisphenol (more specifically 2,2-bis(4-hydroxyphenyl)propane (=bisphenol A)), hydroquinone, 4,4'-dihydroxydiphenyl, bis(4-hydroxyphenyl)methane, 1,1-bis(4-hydroxyphenyl)cyclohexane, 2,2-bis(3,5-dimethyl-4-hydroxyphenyl)propane, bis(4-hydroxyphenyl)sulfide, bis(4-hydroxyphenyl)sulfone, bis(4-hydroxyphenyl)sulfoxide, bis(4-hydroxyphenyl)ketone, bis(4-hydroxyphenyl)ether, halogenated bisphenol such as 2,2-bis(3,5-dibromo-4-hydroxyphenyl)propane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, etc., and preferably bisphenol A may be used.

The carbonate precursor is another monomer constituting the aromatic polycarbonate resin, and its non-limited example may be carbonyl chloride (phosgene), carbonyl bromide, bis halo formate, diphenyl carbonate, dimethyl carbonate, etc., and preferably carbonyl chloride (phosgene) may be used.

As the molecular weight-controlling agent, the conventionally known compound, i.e., a monofunctional compound similar to a monomer used in preparation of thermoplastic aromatic polycarbonate resin may be used. The non-limiting examples of the molecular weight-controlling agent may be derivatives based on phenol (for example, para-isopropylphenol, para-tert-butylphenol (PTBP), para-cumylphenol, para-isooctylphenol, para-isononylphenol, etc.) aliphatic alcohols, etc., and preferably para-tert-butylphenol (PTBP) may be used.

The aromatic polycarbonate resin prepared from such dihydric phenol, carbonate precursor and molecular weight-controlling agent, may be, for example, linear polycarbonate resin, branched polycarbonate resin, copolycarbonate resin, polyestercarbonate resin, silicone copolymerized polycarbonate, etc., and such a resin alone or a mixture of two or more thereof may be used.

The aromatic polycarbonate resin may have a preferable viscosity average molecular weight (Mv, measured in methylene chloride solution at 25°C) (g/mol) of 15,000 to 40,000, more preferably 17,000 to 30,000, and most preferably 20,000 to 30,000. If the viscosity average molecular weight of the aromatic polycarbonate resin is less than 15,000, mechanical properties such as impact strength, tensile strength, etc. may be lowered, and to the contrary, if it is greater than 40,000, melt viscosity increases, and thereby problems may be caused in resin processing.

**(B) Polyalkylene glycol adduct of anhydrosugar alcohol**

The polyalkylene glycol adduct of anhydrosugar alcohol comprised in the resin composition of the present invention is a compound having a form wherein polyalkylene glycol substituent is attached to the terminal hydroxy group of anhydrosugar alcohol.

The anhydrosugar alcohol can be prepared by dehydration reaction of hydrogenated sugar derived from natural

product. Hydrogenated sugar (also referred to as "sugar alcohol") means a compound obtained by adding hydrogen to the reductive end group in sugar, and generally has a chemical formula of $HOCH_2(CHOH)_nCH_2OH$ wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

The anhydrosugar alcohol may be monoanhydrosugar alcohol, dianhydrosugar alcohol or a mixture thereof, and although it is not especially limited, dianhydrosugar alcohol can be used.

Monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing.

Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present.

The kind of the dianhydrosugar alcohol is not especially limited, and it may be preferably dianhydrohexitol, and more specifically 1,4:3,6-dianhydrohexitol. 1,4:3,6-dianhydrohexitol may be isosorbide, isomannide, isoidide or a mixture of two or more of the foregoing.

In a preferable embodiment of the present invention, the anhydrosugar alcohol may be isosorbide.

In an embodiment, the polyalkylene glycol may be polyethylene glycol, polypropylene glycol, polybutylene glycol, or combination thereof.

In an embodiment, the polyalkylene glycol may have a molecular weight (weight average molecular weight) of 500 to 5,000 g/mol, and more specifically 1,000 to 4,000 g/mol, but it is not limited thereto.

In an embodiment, the polyalkylene glycol adduct of anhydrosugar alcohol may be represented by the following formula 2:

[Formula 2] $H\text{-}[X]_p\text{-}[O\text{-}A\text{-}O]\text{-}[X']_q\text{-}H$

In the above formula 2,

[O-A-O] is a part derived from anhydrosugar alcohol by removing hydrogen atoms from the both terminal hydroxy groups of the anhydrosugar alcohol,
$H\text{-}[X]_p$ is independently $H\text{-}[O\text{-alkylene}]_p$,
$[X']_q\text{-}H$ is independently $[\text{alkylene-O}]_q\text{-}H$, and
each of p and q independently represents an integer of 2 to 15.

More specifically, the anhydrosugar alcohol may be isosorbide; the alkylene may be a linear alkylene having 2 to 8 carbon atoms or a branched alkylene having 3 to 8 carbon atoms, and more specifically, it may be ethylene, propylene, butylene, or combination thereof; and each of p and q may independently represent an integer of 2 to 12.

In an embodiment, the polyalkylene glycol adduct of anhydrosugar alcohol may be a compound represented by the following formula 3:

[Formula 3]

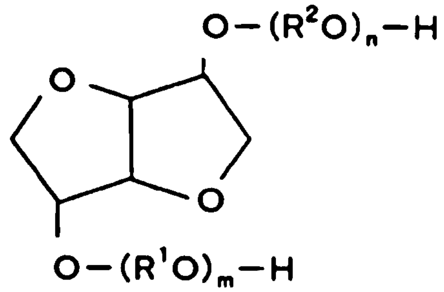

In the above formula 3,

each of $R^1$ and $R^2$ independently represents a linear alkylene having 2 to 8 carbon atoms or a branched alkylene having 3 to 8 carbon atoms, and
each of m and n independently represents an integer of 2 to 15.

More specifically, in the above formula 3, each of $R^1$ and $R^2$ independently represents ethylene group, propylene group, isopropylene group or butylene group, and preferably $R^1$ and $R^2$ are the same; and each of m and n independently represents an integer of 2 to 12.

In an embodiment, for example, as shown in the following reaction schemes, the polyalkylene glycol adduct of anhydrosugar alcohol may be prepared by reacting the hydroxy group at both ends or one end (preferably both ends) of anhydrosugar alcohol with alkylene oxide in the presence of a catalyst (e.g. a base catalyst), and obtained as a compound having a form wherein the hydrogen of the hydroxy group at both ends or one end (preferably both ends) of the anhydrosugar alcohol is substituted with a hydroxyalkyl group which is a ring-opened form of the alkylene oxide.

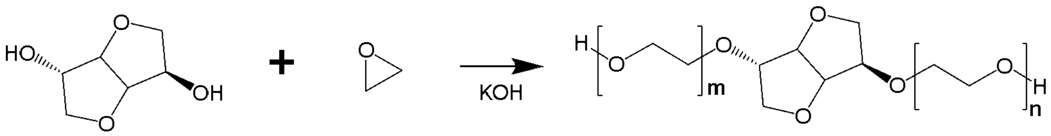


ISB Isosorbide | EO Ethylene oxide | EI Isosorbide-polyethylene glycol

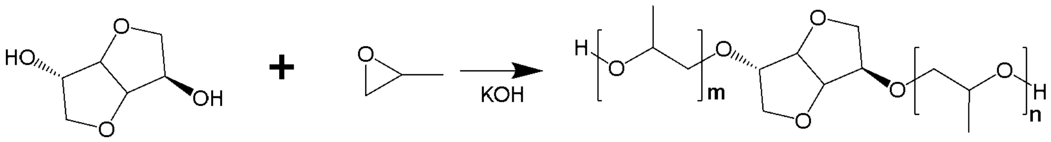


ISB Isosorbide | PO Propylene oxide | PI Isosorbide-polypropylene glycol

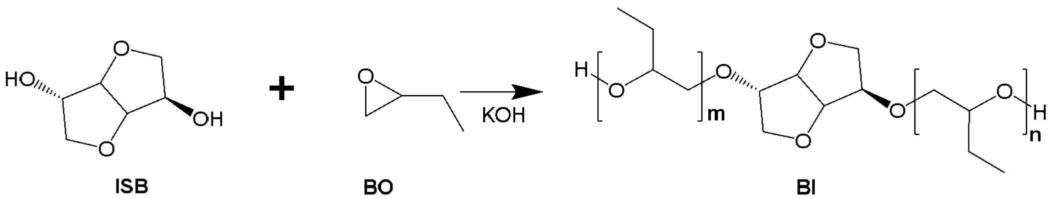


ISB Isosorbide | BO Butylene oxide | BI Isosorbide-polybutylene glycol

In an embodiment, the alkylene oxide may be a linear alkylene oxide having 2 to 8 carbon atoms or a branched alkylene oxide having 3 to 8 carbon atoms, and more specifically, it may be ethylene oxide, propylene oxide, butylene oxide, or combination thereof.

In an embodiment, the anhydrosugar alcohol may be treated with acid component before the reaction with the alkylene oxide, and the reaction of the acid-treated anhydrosugar alcohol with the alkylene oxide may be conducted, for example, in high pressure reactor capable of being pressurized (for example, pressurized to 3MPa or higher) in the presence of base catalyst (for example, alkali metal hydroxide such as sodium hydroxide, potassium hydroxide, etc. or alkaline earth metal hydroxide such as calcium hydroxide, etc.) at an elevated temperature (for example, 100°C to 180°C, or 120°C to 160°C) during a time of, for example, 1 hour to 8 hours, or 2 hours to 4 hours, but it is not limited thereto. The reaction molar ratio of alkylene oxide to 1 mole of anhydrosugar alcohol may be, for example, 1 mole or more, 2 moles or more, or 3 moles or more, and it also may be 30 moles or less, 20 moles or less, 15 moles or less, or 12 moles or less, and for example, it may be 1 mole to 30 moles, preferably 2 to 20 moles, and more preferably 3 to 15 moles, but it is not limited thereto.

In an embodiment, based on 100 parts by weight of the polycarbonate resin, the polyalkylene glycol adduct of anhydrosugar alcohol may be comprised in the resin composition of the present invention in an amount of from more than 0.1 part by weight to less than 5 parts by weight. If the amount of the polyalkylene glycol adduct of anhydrosugar alcohol in the resin composition is out of the above range, the resistance to ionizing radiation of the resin composition may deteriorate, resulting in serious changes in color and lightness after gamma ray irradiation, poor color resilience over time, and poor impact strength retention ratio.

In an embodiment, based on 100 parts by weight of the polycarbonate resin, the amount of the polyalkylene glycol adduct of anhydrosugar alcohol in the resin composition of the present invention may be, for example, more than 0.1 part by weight, 0.11 part by weight or more, 0.15 part by weight or more, 0.2 part by weight or more, 0.25 part by weight or more, 0.3 part by weight or more, 0.35 part by weight or more, 0.4 part by weight or more, 0.45 part by weight or more, 0.5 part by weight or more, 0.55 part by weight or more, 0.6 part by weight or more, 0.65 part by weight or more, 0.7 part by weight or more, 0.75 part by weight or more, or 0.8 part by weight or more, and it also may be less than 5 parts by weight, 4.9 parts by weight or less, 4.5 parts by weight or less, 4 parts by weight or less, 3.5 parts by weight or less, 3 parts by weight or less, 2.5 parts by weight or less, 2 parts by weight or less, 1.5 parts by weight or less, 1.4 parts by weight or less, 1.3 parts by weight or less, or 1.2 parts by weight or less, but it is not especially limited thereto.

**(C) Colorant component**

The colorant component comprised in the resin composition of the present invention is blue pigment, red pigment, or combination thereof.

In an embodiment, the colorant component is blue pigment; or blue pigment and red pigment. (Alternatively, the coloring component may be called a pigment exhibiting a blue-violet color.)

In an embodiment, the blue pigment may be anthraquinone-based blue pigment, phthalocyanine-based blue pigment, or combination thereof.

In an embodiment, an example of the anthraquinone-based blue pigment may be Solusis VIOLET B, Solusis SLS VT 13, etc., and an example of the phthalocyanine-based blue pigment may be Chemizone, BLUE K6907, etc., but it is not especially limited thereto.

In an embodiment, the red pigment may be anthraquinone-based red pigment.

In an embodiment, an example of the anthraquinone-based red pigment may be Solusis VIOLET E3R, MJ Finechem VIOLET 3R, UNI VIOLET S-BR, etc., but it is not especially limited thereto.

In an embodiment, when the colorant component is a combination of blue pigment and red pigment, the combination ratio may be 1 to 3 (blue pigment):1 (red pigment) as blue:red weight ratio, and more specifically, 1.5 to 2.5 (blue pigment):1 (red pigment), for example, 2:1.

In an embodiment, based on 100 parts by weight of the polycarbonate resin, the colorant component may be comprised in the resin composition of the present invention in an amount of 0.0001 part by weight to 0.001 part by weight. If the amount of the colorant component in the resin composition is less than the above level, the resistance to ionizing radiation of the resin composition may deteriorate, resulting in serious changes in color and lightness after gamma ray irradiation, and poor color resilience over time, and to the contrary, if it is more than the above level, the change in lightness after gamma ray irradiation may be serious.

In an embodiment, based on 100 parts by weight of the polycarbonate resin, the amount of the colorant component in the resin composition of the present invention may be, for example, 0.0001 part by weight or more, 0.0005 part by weight or more, or 0.0006 part by weight or more, and it also may be 0.001 part by weight or less, 0.0009 part by weight or less, 0.0008 part by weight or less, 0.0007 part by weight or less, or 0.0006 part by weight or less, but it is not especially limited thereto.

In addition to the above-explained components, the resin composition of the present invention may further comprise phosphorus-based stabilizer.

As the phosphorus-based stabilizer, conventionally known one can be used, and specifically, for example, oxoacid of phosphorus such as phosphoric acid, phosphonic acid, phosphorous acid, phosphinic acid, polyphosphoric acid, etc.; acidic pyrophosphate metal salt such as acidic sodium pyrophosphate, acidic potassium pyrophosphate, acidic calcium pyrophosphate, etc.; phosphate salt of group 1 or group 2 B metal such as potassium phosphate, sodium phosphate, cesium phosphate, zinc phosphate, etc.; phosphate compound, phosphite compound, phosphonite compound, etc. can be used, and in terms of resistance to color change and continuous productivity, phosphite compound can be used preferably, but it is not limited thereto.

In an embodiment, the phosphite compound may be a trivalent phosphorus compound represented by the general formula: $P(OR)_3$, where R represents a monovalent or divalent organic group. More specifically, the phosphite compound may be, for example, triphenylphosphite, tris(monononylphenyl)phosphite, tris(monononyl/dinonylphenyl) phosphite, tris(2,4-di-tert-butylphenyl)phosphite, monooctyldiphenylphosphite, dioctylmonophenylphosphite, monodecyldiphenylphosphite, didecylmonophenylphosphite, tridecylphosphite, trilaurylphosphite, tristearylphosphite, distearylpentaerythritoldiphosphite, bis(2,4-di-tert-butyl-4-methylphenyl)pentaerythritolphosphite, bis(2,6-di-tert-butylphenyl) octylphosphate, 2,2-methylenebis(4,6-di-tert-butylphenyl)octylphosphate, tetrakis(2,4-di-tert-butyl Phenyl)-4,4'-biphenylene-diphosphite, 6-[3-(3-tert-butyl-hydroxy-5-methylphenyl)propoxy]-2,4,8,10-tetra-tert-butyldibenzo[d,f][1,3,2]-dioxaphosphepin, etc., but it is not limited thereto.

The phosphorus-based stabilizer may be used alone, or two or more thereof may be used in combination.

In an embodiment, when the phosphorus-based stabilizer is comprised in the resin composition of the present

invention, the amount thereof may be 0.05 part by weight to 1 part by weight based on 100 parts by weight of the polycarbonate resin, and more specifically, it may be 0.1 part by weight or more, 0.15 part by weight or more, or 0.2 part by weight or more, and may also be 0.9 part by weight or less, 0.8 part by weight or less, 0.7 part by weight or less, 0.6 part by weight or less, or 0.5 part by weight or less, but it is not especially limited thereto.

In addition to the above-explained components, the resin composition of the present invention may further comprise phenol-based stabilizer.

As the phenol-based stabilizer, conventionally known one can be used, and the amount thereof may be 0.05 part by weight to 1 part by weight based on 100 parts by weight of the polycarbonate resin, and more specifically, it may be 0.1 part by weight or more, 0.15 part by weight or more, or 0.2 part by weight or more, and may also be 0.9 part by weight or less, 0.8 part by weight or less, 0.7 part by weight or less, 0.6 part by weight or less, or 0.5 part by weight or less, but it is not especially limited thereto.

In addition to the above-explained components, the resin composition of the present invention may further comprise lubricant.

Specifically, the lubricant may be polyethylene compound, ethylene-ester compound, ethylene glycol-glycerin ester compound, montan compound, ethylene glycol-glycerin montan acid ester compound, or a mixture of two or more thereof, and the amount thereof may be 0.05 part by weight to 1 part by weight based on 100 parts by weight of the polycarbonate resin, and more specifically, it may be 0.1 part by weight or more, 0.15 part by weight or more, or 0.2 part by weight or more, and may also be 0.9 part by weight or less, 0.8 part by weight or less, 0.7 part by weight or less, 0.6 part by weight or less, or 0.5 part by weight or less, but it is not especially limited thereto.

In addition to the above-explained components, within the scope capable of achieving the purpose of the present invention, the resin composition of the present invention may further comprise one or more other additives, if necessary.

The amount of such other additive, if exists, may be, for example, 0.01 part by weight to 10 parts by weight, or 0.01 part by weight to 5 parts by weight, based on 100 parts by weight of the polycarbonate resin.

According to the other aspect of the present invention, a molded article comprising the polycarbonate resin composition of the present invention is provided.

The molded article of the present invention is manufactured by extruding, casting, blow molding, or injection molding of a melt of the polyester resin composition of the present invention.

In an embodiment, the molded article of the present invention is a medical device resistant to ionizing radiation.

The present invention is explained in more detail through the following Examples and Comparative Examples. However, the scope of the present invention is not limited thereby in any manner.

[EXAMPLES]

The components used in Examples and Comparative Examples of the present invention are explained below, and the amount of each component is described in Table 1.

(A) Polycarbonate resin:

(A-1) TRIREX 3022PJ with a viscosity average molecular weight of 23,000
(A-2) TRIREX 3030PJ with a viscosity average molecular weight of 30,000
(A-3) TRIREX 3020PJ with a viscosity average molecular weight of 19,000

(B) Alkylene glycol adduct of isosorbide:

(B-1) ISB-PPG: PI-1000 (polypropylene glycol adduct, molecular weight: 1000 g/mol)
(B-2) ISB-PPG: PI-2000 (polypropylene glycol adduct, molecular weight: 2000 g/mol)
(B-3) ISB-PEG: EI-2000 (polyethylene glycol adduct, molecular weight: 2000 g/mol)
(B-4) ISB-PBG: BI-2000 (polybutylene glycol adduct, molecular weight: 2000 g/mol)

(C) Polypropylene glycol (PPG):
PPG-2000 (molecular weight: 2000 g/mol)
(D) Polyethylene glycol (PEG):
PEG-2000 (molecular weight: 2000 g/mol)
(E) Phosphorus-based stabilizer

(E-1) Tris-(2,4-di-tert-butyl-phenyl)-phosphite (Songnox 1076)
(E-2) Octadecyl-3-(3,5-di-tert-butyl-4-hydroxyphenyl) propionate (ALK240)

(F) Lubricant:
Fatty acid methyl ester lubricant (PETS-AHS)
(G) Colorant component:

(G-1) Anthraquinone-based blue pigment (bluish violet oil solvent dye Violet 13, Solusis SLS VT 13)
(G-2) Anthraquinone-based red pigment (reddish violet transparent oil solvent dye Violet 36, UNI VIOLET S-BR)
(G-3) Phthalocyanine-based blue pigment (blue pigment 15: 1, Chemizone, BLUE K6907)

**Examples 1 to 20 and Comparative Examples 1 to 14**

The resin compositions were prepared by mixing the components with the compositional ratio shown in Table 1 below, and then extruded by using a twin-axes melting-kneading extruder with L/D=48 and Φ=25mm under the conditions of melting temperature of 280 to 300°C, screw rotation speed of 150 rpm, first vent pressure of approximately -600 mmHg, and self-feeding speed of 15 kg/h. The extruded strands were cooled in water and then cut by rotating cutter to prepare pellets.

The prepared pellets were dried with hot air at 100°C to 120°C for 4 hours, and then subjected to injection molding at cylinder temperature of 280°C to 300°C and molding temperature of 80°C to prepare specimens. The properties of each specimen prepared were measured by the methods explained below, and the results thereof are shown in Table 2 below.

- Melt Index (MI): Measured at 300°C and 1.2 kgf load according to ASTM D1238
- Tensile strength (MPa): Evaluated according to ASTM D638
- Flexural strength (MPa) and flexural modulus (MPa): Evaluated according to ASTM D790
- Impact strength (J/m): Evaluated according to ASTM D256 (1/8 inch thick, notched-Izod)
- Heat deformation temperature (HDT, °C): Evaluated under a load of 18.6 kg/cm$^2$ according to ASTM D648
- Yellowness Index (YI): The YI value of square specimen (50x80x3.0 mm) was measured according to ASTM D1925 using CI 7800SE spectrophotometer of X-rite.
- Lightness (L): The L value of square specimen (50x80x3.0 mm) was measured according to ASTM D2244 using CI 7800SE spectrophotometer of X-rite.
- ΔYI value after 1 day from gamma ray irradiation ($\Delta YI_{1d}$): For the square specimen of the resin composition, the YI value ($YI_0$) was measured before gamma ray irradiation, and the YI value ($YI_{1d}$) was measured after 1 day from 25 kGy gamma ray irradiation, and then the ΔYI value ($\Delta YI_{1d}$) after 1 day from gamma ray irradiation was calculated according to the following equation:

$$\Delta YI_{1d} = YI_{1d} - YI_0$$

- ΔYI value after 7 days from gamma ray irradiation ($\Delta YI_{7d}$): For the square specimen of the resin composition, the YI value ($YI_0$) was measured before gamma ray irradiation, and the YI value ($YI_{7d}$) was measured after 7 days from 25 kGy gamma ray irradiation, and then the Δ YI value ($\Delta YI_{7d}$) after 7 days from gamma ray irradiation was calculated according to the following equation:

$$\Delta YI_{7d} = YI_{7d} - YI_0$$

- Impact strength retention ratio value after 1 day from gamma ray irradiation (Impact strength $\%_{1d}$): For the specimen of the resin composition for measuring impact strength, the impact strength was measured before gamma ray irradiation, and the impact strength was measured after 1 day from 25 kGy gamma ray irradiation, and then the impact strength value of the specimen after the gamma ray irradiation was expressed as a relative percentage (%) when the impact strength value of the specimen before the gamma ray irradiation was set to 100%.
- L value after 7 days from gamma ray irradiation ($L_{7d}$): For the square specimen of the resin composition, the L value ($L_{7d}$) was measured after 7 days from 25 kGy gamma ray irradiation.

[Table 1] (amount unit: part by weight)

| Component | Example | | | | | | | | | |
|---|---|---|---|---|---|---|---|---|---|---|
| | 1 | 2 | 3 | 4 | 5 | 6 | 7 | 8 | 9 | 10 |
| (A-1) | 100 | 100 | 100 | 100 | 100 | 100 | 100 | | | 100 |

(continued)

| Component | Example | | | | | | | | | |
|---|---|---|---|---|---|---|---|---|---|---|
| | 1 | 2 | 3 | 4 | 5 | 6 | 7 | 8 | 9 | 10 |
| (A-2) | | | | | | | | | 100 | |
| (A-3) | | | | | | | | 100 | | |
| (B-1) | | | | 0.4 | 0.8 | | | | | 1.2 |
| (B-2) | 0.4 | 0.8 | 1.2 | | | | | 0.8 | 0.8 | |
| (B-3) | | | | | | 0.8 | | | | |
| (B-4) | | | | | | | 0.8 | | | |
| (E-1) | 0.1 | 0.1 | 0.1 | 0.1 | 0.1 | 0.1 | 0.1 | 0.1 | 0.1 | 0.1 |
| (E-2) | 0.1 | 0.1 | 0.1 | 0.1 | 0.1 | 0.1 | 0.1 | 0.1 | 0.1 | 0.1 |
| (F) | 0.2 | 0.2 | 0.2 | 0.2 | 0.2 | 0.2 | 0.2 | 0.2 | 0.2 | 0.2 |
| (G-1) | 0.0002 | 0.0002 | 0.0002 | 0.0002 | 0.0002 | 0.0002 | 0.0002 | 0.0002 | 0.0002 | 0.0002 |
| (G-2) | 0.0004 | 0.0004 | 0.0004 | 0.0004 | 0.0004 | 0.0002 | 0.0004 | 0.0004 | 0.0004 | 0.0004 |

[Table 1] (continued) (amount unit: part by weight)

| Component | Example | | | | | | | | | |
|---|---|---|---|---|---|---|---|---|---|---|
| | 11 | 12 | 13 | 14 | 15 | 16 | 17 | 18 | 19 | 20 |
| (A-1) | 100 | 100 | 100 | 100 | 100 | 100 | 100 | 100 | 100 | 100 |
| (B-2) | | | | | 0.8 | 0.8 | 0.8 | 0.8 | 0.8 | 0.8 |
| (B-3) | 0.4 | 1.2 | | | | | | | | |
| (B-4) | | | 0.4 | 1.2 | | | | | | |
| (E-1) | 0.1 | 0.1 | 0.1 | 0.1 | 0.5 | 0.1 | 0.1 | 0.1 | 0.1 | 0.1 |
| (E-2) | 0.1 | 0.1 | 0.1 | 0.1 | 0.1 | 0.5 | 0.1 | 0.1 | 0.1 | 0.1 |
| (F) | 0.2 | 0.2 | 0.2 | 0.2 | 0.2 | 0.2 | 0.5 | 0.2 | 0.2 | 0.2 |
| (G-1) | 0.0002 | 0.0002 | 0.0002 | 0.0002 | 0.0002 | 0.0002 | 0.0002 | | | |
| (G-2) | 0.0004 | 0.0004 | 0.0004 | 0.0004 | 0.0004 | 0.0004 | 0.0004 | 0.0004 | 0.0001 | |
| (G-3) | | | | | | | | | | 0.001 |

[Table 1] (continued) (amount unit: part by weight)

| Component | Comparative Example | | | | |
|---|---|---|---|---|---|
| | 1 | 2 | 3 | 4 | 5 |
| (A-1) | 100 | 100 | 100 | 100 | 100 |
| (C) | | 0.4 | 0.8 | 1.2 | |
| (D) | | | | | 0.8 |
| (E-1) | 0.1 | 0.1 | 0.1 | 0.1 | 0.1 |
| (E-2) | 0.1 | 0.1 | 0.1 | 0.1 | 0.1 |
| (F) | 0.2 | 0.2 | 0.2 | 0.2 | 0.2 |
| (G-1) | 0.0002 | 0.0002 | 0.0002 | 0.0002 | 0.0002 |
| (G-2) | 0.0004 | 0.0004 | 0.0004 | 0.0004 | 0.0004 |

[Table 1] (continued) (amount unit: part by weight)

| Component | Comparative Example | | | | | | | | |
|---|---|---|---|---|---|---|---|---|---|
| | 6 | 7 | 8 | 9 | 10 | 11 | 12 | 13 | 14 |
| (A-1) | 100 | 100 | 100 | 100 | 100 | 100 | 100 | 100 | 100 |
| (B-1) | 0.1 | 5 | | | | | | | |
| (B-2) | | | 0.1 | 5 | | | | | |
| (B-3) | | | | | 0.1 | 5 | | | |
| (B-4) | | | | | | | 0.1 | 5 | |
| (C) | | | | | | | | | 0.8 |
| (E-1) | 0.1 | 0.1 | 0.1 | 0.1 | 0.1 | 0.1 | 0.1 | 0.1 | 0.1 |
| (E-2) | 0.1 | 0.1 | 0.1 | 0.1 | 0.1 | 0.1 | 0.1 | 0.1 | 0.1 |
| (F) | 0.2 | 0.2 | 0.2 | 0.2 | 0.2 | 0.2 | 0.2 | 0.2 | 0.2 |
| (G-1) | 0.0002 | 0.0002 | 0.0002 | 0.0002 | 0.0002 | 0.0002 | 0.0002 | 0.0002 | |
| (G-2) | 0.0004 | 0.0004 | 0.0004 | 0.0004 | 0.0004 | 0.0004 | 0.0004 | 0.0004 | |
| (G-3) | | | | | | | | | 0.001 |

[Table 2]

| Property | Example | | | | | | | | | |
|---|---|---|---|---|---|---|---|---|---|---|
| | 1 | 2 | 3 | 4 | 5 | 6 | 7 | 8 | 9 | 10 |
| MI | 14.3 | 15.6 | 16.5 | 14.1 | 15.4 | 15.1 | 15.7 | 24.5 | 3.5 | 16.8 |
| Tensile strength | 642 | 651 | 662 | 642 | 655 | 650 | 652 | 635 | 648 | 652 |
| Flexural strength | 933 | 936 | 934 | 933 | 934 | 966 | 937 | 932 | 916 | 930 |
| Flexural modulus | 22,365 | 22,587 | 22,031 | 22,048 | 22,531 | 22,930 | 22,257 | 22,123 | 21,587 | 22,428 |
| Impact strength | 81.5 | 80.9 | 79.5 | 81.9 | 79.6 | 80.9 | 80.2 | 77.5 | 90.9 | 79 |
| HDT | 130 | 129 | 128 | 131 | 130 | 129 | 130 | 129 | 132 | 128 |
| $\Delta YI_{1d}$ | 21.3 | 19.8 | 22.2 | 23.5 | 22.1 | 24 | 23.3 | 20.5 | 19.5 | 22.4 |
| $\Delta YI_{7d}$ | 12.5 | 10.8 | 11.5 | 13.2 | 12.8 | 13.4 | 12.9 | 12 | 11.2 | 12.3 |
| Impact strength $\%_{1d}$ | 99.6 | 99.4 | 101.3 | 97.2 | 97.7 | 96.2 | 101.5 | 98.7 | 99.2 | 98.5 |
| $L_{7d}$ | 90.2 | 90.5 | 90.3 | 89.8 | 90.3 | 90.3 | 90.5 | 90.6 | 90.1 | 90.2 |

[Table 2] (continued)

| Property | Example | | | | | | | | | |
|---|---|---|---|---|---|---|---|---|---|---|
| | 11 | 12 | 13 | 14 | 15 | 16 | 17 | 18 | 19 | 20 |
| MI | 14.2 | 16.2 | 14.3 | 16.3 | 16.1 | 15.9 | 16.2 | 14.5 | 15.8 | 15.2 |
| Tensile strength | 645 | 653 | 648 | 652 | 648 | 650 | 645 | 652 | 645 | 635 |
| Flexural strength | 935 | 932 | 936 | 928 | 935 | 932 | 925 | 910 | 915 | 920 |
| Flexural modulus | 22,165 | 22,652 | 22,415 | 22,582 | 22,252 | 22,685 | 22,102 | 22140 | 22562 | 22520 |
| Impact strength | 81 | 78.5 | 81.6 | 80.5 | 78.9 | 79.1 | 77.5 | 82.3 | 82.1 | 82.3 |
| HDT | 129 | 130 | 130 | 129 | 128 | 128 | 127 | 129 | 129 | 129 |
| $\Delta YI_{1d}$ | 24 | 23.8 | 23.7 | 23.2 | 22.4 | 22.2 | 22.7 | 22.1 | 22.6 | 21.5 |
| $\Delta YI_{7d}$ | 14 | 13.8 | 13.5 | 13.3 | 11.4 | 11.8 | 12.2 | 11.9 | 12.3 | 12.5 |
| Impact strength $\%_{1d}$ | 99.2 | 100.6 | 99.6 | 99.8 | 99.2 | 99.1 | 98.3 | 98.4 | 99.5 | 98.9 |

(continued)

| Property | Example | | | | | | | | | |
|---|---|---|---|---|---|---|---|---|---|---|
| | 11 | 12 | 13 | 14 | 15 | 16 | 17 | 18 | 19 | 20 |
| $L_{7d}$ | 89.5 | 90.2 | 89.9 | 90.3 | 90.1 | 90.3 | 89.9 | 91.2 | 91 | 87.6 |

[Table 2] (continued)

| Property | Comparative Example | | | | |
|---|---|---|---|---|---|
| | 1 | 2 | 3 | 4 | 5 |
| MI | 13.2 | 14.7 | 15.8 | 16.5 | 15.1 |
| Tensile strength | 640 | 638 | 650 | 645 | 640 |
| Flexural strength | 915 | 884 | 925 | 920 | 915 |
| Flexural modulus | 22,135 | 21,360 | 21,711 | 21,750 | 21,500 |
| Impact strength | 82.5 | 82.2 | 81.3 | 79.5 | 78.2 |
| HDT | 134 | 131 | 128 | 128 | 128 |
| $\Delta YI_{1d}$ | 26.8 | 25.7 | 25.6 | 26.1 | 26.4 |
| $\Delta YI_{7d}$ | 26.0 | 16.3 | 15.5 | 14.8 | 17.1 |
| Impact strength $\%_{1d}$ | 93.2 | 94.3 | 94.7 | 94.8 | 93.8 |
| $L_{7d}$ | 78.5 | 84.8 | 85.4 | 85.4 | 84.3 |

[Table 2] (continued)

| Property | Comparative Example | | | | | | | | |
|---|---|---|---|---|---|---|---|---|---|
| | 6 | 7 | 8 | 9 | 10 | 11 | 12 | 13 | 14 |
| MI | 12.8 | 24.5 | 12.5 | 23.8 | 12.6 | 26.5 | 12.4 | 24.2 | 15.3 |
| Tensile strength | 641 | 562 | 640 | 565 | 638 | 532 | 640 | 528 | 645 |
| Flexural strength | 918 | 815 | 923 | 812 | 920 | 795 | 921 | 835 | 912 |
| Flexural modulus | 22,215 | 19,500 | 22,322 | 18,850 | 21,985 | 18,201 | 22,106 | 19,530 | 21,320 |
| Impact strength | 82.1 | 60.3 | 82.3 | 62.3 | 80.5 | 55.2 | 81.5 | 58.1 | 82.1 |
| HDT | 132 | 118 | 133 | 120 | 133 | 115 | 133 | 119 | 129 |
| $\Delta YI_{1d}$ | 26.2 | 27.5 | 25.8 | 26.9 | 26.3 | 29.5 | 26.5 | 28.8 | 25.8 |
| $\Delta YI_{7d}$ | 23.5 | 21.2 | 23.4 | 19.5 | 24.2 | 24.5 | 23.8 | 23.5 | 16.1 |
| Impact strength $\%_{1d}$ | 93.7 | 92.8 | 93.8 | 91.8 | 93.4 | 89.5 | 93.5 | 91.5 | 94.5 |
| $L_{7d}$ | 79.8 | 82.5 | 80.5 | 82.8 | 79.5 | 77.8 | 80.3 | 80.2 | 83.8 |

As shown in Table 2 above, the compositions of Examples 1 to 20 all exhibited excellent mechanical properties and at the same time significantly superior resistance to ionizing radiation as compared with Comparative Examples (i.e., the change in yellowness index was small, the impact strength retention ratio was high, and the lightness (Color L) was also excellent after ionizing radiation (gamma ray) irradiation). In particular, the compositions of Examples 1 to 20 had significantly lower ΔYI values ($\Delta YI_{1d}$) after 1 day from gamma ray irradiation than those of Comparative Examples 1 to 14, which means that the resistance to color change was significantly excellent as compared with Comparative Examples. In addition, the ΔYI value ($\Delta YI_{7d}$) after 7 days from gamma ray irradiation was significantly lower, which means that the color resilience ability was significantly excellent as compared with Comparative Examples.

## Claims

1. A polycarbonate resin composition resistant to ionizing radiation, comprising:

   (A) polycarbonate (PC) resin;
   (B) polyalkylene glycol adduct of anhydrosugar alcohol; and
   (C) a colorant component which is blue pigment, red pigment, or combination thereof,

   wherein, when a 3 mm thick specimen of the resin composition is irradiated with 25 kGy gamma ray and measured after 7 days from the irradiation according to ASTM D1925, the yellowness index change (ΔYI) value is 14.7 or less.

2. The polycarbonate resin composition of claim 1, wherein, when a 3 mm thick specimen of the resin composition is irradiated with 25 kGy gamma ray and measured after 1 day from the irradiation according to ASTM D1925, the yellowness index change (ΔYI) value is 25.5 or less.

3. The polycarbonate resin composition of claim 1, wherein, when a 3 mm thick specimen of the resin composition is irradiated with 25 kGy gamma ray and measured after 7 days from the irradiation according to ASTM D2244, the lightness value is 85.5 or more.

4. The polycarbonate resin composition of claim 1, wherein, when an impact strength specimen (1/8 inch thick, notched-Izod) of the resin composition is irradiated with 25 kGy gamma ray and measured after 1 day from the irradiation according to ASTM D256, the impact strength retention ratio value is 94.9% or more.

5. The polycarbonate resin composition of claim 1, wherein the polycarbonate resin is an aromatic polycarbonate resin.

6. The polycarbonate resin composition of claim 1, wherein the polyalkylene glycol adduct of anhydrosugar alcohol is represented by the following formula 2:

   [Formula 2] $H\text{-}[X]_p\text{-}[O\text{-}A\text{-}O]\text{-}[X']_q\text{-}H$

   in the above formula 2,

   [O-A-O] is a part derived from anhydrosugar alcohol by removing hydrogen atoms from the both terminal hydroxy groups of the anhydrosugar alcohol,
   $H\text{-}[X]_p$ is independently $H\text{-}[O\text{-alkylene}]_p$,
   $[X']_q\text{-}H$ is independently $[\text{alkylene-}O]_q\text{-}H$, and
   each of p and q independently represents an integer of 2 to 15.

7. The polycarbonate resin composition of claim 1, wherein the colorant component is blue pigment alone.

8. The polycarbonate resin composition of claim 1, wherein the colorant component is a combination of blue pigment and red pigment.

9. The polycarbonate resin composition of claim 1, which further comprises phosphorus-based stabilizer.

10. The polycarbonate resin composition of claim 1, which further comprises lubricant.

11. A molded article comprising the polycarbonate resin composition of any one of claims 1 to 10.

12. The molded article of claim 11, which is a medical device resistant to ionizing radiation.

**INTERNATIONAL SEARCH REPORT**

International application No.
**PCT/KR2024/003407**

**A. CLASSIFICATION OF SUBJECT MATTER**

**C08K 5/1539**(2006.01)i; **C08K 5/00**(2006.01)i; **C08K 5/49**(2006.01)i; **C08K 3/014**(2018.01)i; **C08K 3/32**(2006.01)i; **C08L 69/00**(2006.01)i

According to International Patent Classification (IPC) or to both national classification and IPC

**B. FIELDS SEARCHED**

Minimum documentation searched (classification system followed by classification symbols)

C08K 5/1539(2006.01); B29C 45/63(2006.01); C08J 5/00(2006.01); C08K 5/00(2006.01); C08K 5/1535(2006.01); C08L 69/00(2006.01); F21V 8/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 감마선(gamma ray), 폴리카보네이트(polycarbonate), 무수당 알코올 폴리알킬렌글리콜(anhydrosugar alcohol polyalkylene glycol), 착색제(coloring agent)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2017-0003880 A (LOTTE ADVANCED MATERIALS CO., LTD.) 10 January 2017 (2017-01-10)<br>See claims 1-8; and paragraphs [0029]-[0063]. | 1-12 |
| Y | KR 10-2023-0013667 A (SAMYANG CORPORATION) 27 January 2023 (2023-01-27)<br>See abstract; claims 1-6; paragraphs [0064] and [0120]-[0122]; and table 1. | 1-12 |
| A | KR 10-2017-0049720 A (LOTTE ADVANCED MATERIALS CO., LTD.) 11 May 2017 (2017-05-11)<br>See entire document. | 1-12 |
| A | JP 2017-185681 A (MITSUBISHI ENGINEERING PLASTICS CORP.) 12 October 2017 (2017-10-12)<br>See entire document. | 1-12 |
| A | KR 10-2018-0135896 A (COVESTRO DEUTSCHLAND AG) 21 December 2018 (2018-12-21)<br>See entire document. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 June 2024** | **24 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/003407**

| Patent document cited in search report | Publication date (day/month/year) | Patent family member(s) | Publication date (day/month/year) |
|---|---|---|---|
| KR 10-2017-0003880 A | 10 January 2017 | KR 10-1886496 B1 | 08 August 2018 |
| KR 10-2023-0013667 A | 27 January 2023 | CN 117580911 A | 20 February 2024 |
| | | EP 4372052 A1 | 22 May 2024 |
| | | WO 2023-287223 A1 | 19 January 2023 |
| KR 10-2017-0049720 A | 11 May 2017 | CN 108350259 A | 31 July 2018 |
| | | CN 108350259 B | 29 June 2021 |
| | | KR 10-1835942 B1 | 08 March 2018 |
| | | US 10767044 B2 | 08 September 2020 |
| | | US 2019-0062550 A1 | 28 February 2019 |
| | | WO 2017-073929 A1 | 04 May 2017 |
| JP 2017-185681 A | 12 October 2017 | JP 6720656 B2 | 08 July 2020 |
| KR 10-2018-0135896 A | 21 December 2018 | CN 108884268 A | 23 November 2018 |
| | | CN 108884268 B | 30 October 2020 |
| | | EP 3443033 A1 | 20 February 2019 |
| | | EP 3443033 B1 | 12 February 2020 |
| | | JP 2019-511623 A | 25 April 2019 |
| | | JP 7237592 B2 | 13 March 2023 |
| | | KR 10-2234098 B1 | 01 April 2021 |
| | | US 10676613 B2 | 09 June 2020 |
| | | US 2019-0136047 A1 | 09 May 2019 |
| | | WO 2017-178583 A1 | 19 October 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012207230 A
- KR 1020160122630